# EUROPÄISCHE PATENTSCHRIFT

(11) **EP 1 785 788 B1**
(45) Veröffentlichungstag und Bekanntmachung des Hinweises auf die Patenterteilung: **23.03.2011**
(21) Anmeldenummer: 06017738.3
(22) Anmeldetag: 25.08.2006
(51) Int. Cl.: G05B 19/042, A61G 7/018

(54) **Verfahren zum Steuern einer Elektrogeräteanordnung für ein Möbel**
Method and device for controlling an electric equipment system of a piece of furniture
Procédé et dispositif destinés à la commande d'un agencement d'appareils électriques d'un meuble

(30) Priorität: 15.11.2005 DE 102005054843
(43) Veröffentlichungstag der Anmeldung: 16.05.2007
(73) Patentinhaber: Dewert Antriebs- und Systemtechnik GmbH, 32278 Kirchlengern (DE)
(72) Erfinder: Langejürgen, Stefan, 32602 Vlotho (DE)
(74) Vertreter: Specht, Peter

(56) Entgegenhaltungen:
- EP-A1- 1 010 602
- EP-A2- 0 787 475
- DE-A1- 3 834 199
- DE-A1- 10 218 434
- DE-A1- 10 234 145
- DE-A1- 19 733 005
- US-A- 5 168 441
- US-A1- 2003 184 595
- SVEN LINNMAN: "M3S: The Local Network for Electric Wheelchairs and Rehabilitation Equipment" IEEE TRANSACTIONS ON REHABILITATION ENGINEERING, vol. 4, no. 3, 1 September 1996 (1996-09-01), pages 188-192, XP011053803

## Beschreibung

Die Erfindung betrifft ein Verfahren zum Steuern einer Elektrogeräteanordnung für ein Möbel mit einer Buseinrichtung und Busteilnehmern, sowie eine entsprechende Elektrogeräteanordnung.

Derartige Elektroanordnungen sind in der Form von unterschiedlichen elektromotorischen Antriebskonfigurationen zur Verstellung von Möbeln im Zusammenhang mit weiteren elektrischen Verbrauchern bekannt, wie beispielsweise Lampen, Heizungen, Massagegeräte und dergleichen. Diese Geräte sind auf Grund der verschiedenen Möbelkonstruktionen entsprechend angepasst und von großer Vielfalt. Dementsprechend umfangreich sind auch die zugehörigen Steuerungen mit Stromversorgungen, Bedienungsgeräten und mannigfaltigen Anschlussausführungen der zusammenzuschaltenden Einrichtungen.

Unterschiedliche Standardisierungsmaßnahmen sind bekannt, welche die Vielzahl von Anschlusstypen einerseits reduzieren und andererseits eine Möglichkeit schaffen, Elektrogeräteanordnungen flexibler zu gestalten, so zum Beispiel Nachrüstung und einfacher Zusammenbau.

Als ein Beispiel zur Illustration sei die DE 201 07 726 U1 genannt, welche eine Einrichtung zur Steuerung von elektrischen Einrichtungen von Möbeln in einer Modulbauweise beschreibt, wobei die Module zusammensteckbar sind und Datenübertragungsleitungen und Stromversorgungsleitungen besitzen. Die Datenübertragungsleitungen bilden ein Bussystem, an das in den einzelnen Modulen Datenverarbeitungseinrichtungen angeschlossen sind. Weiterhin enthalten die Module Steuerschaltungen für Verbraucher, an mindestens ein Modul ist ein Bediengerät anschließbar, bzw. ein Modul enthält einen Fernsteuerempfänger.

Aus dem Artikel "M 35: The Local Network for Electric Wheelchairs and Rehabilitation Equipment", IEEE Transactions on Rehabilitation Engineering, Vol. 4, No. 3, September 1996, ist ein Bussystem für Rollstühle bekannt, das neben Daten- und Versorgungspfaden noch zusätzliche Sicherheitsleitungen aufweist, die der Initalisierung des Bussystems (Turn On Key-Line) und sicherheitsrelevanten Funktionen (Dead Man's Switch) dienen.

Es besteht der Bedarf, Verfahren für solche Anordnungen zu vereinfachen und noch flexibler hinsichtlich des Anschließens und Steuerns weiterer Geräte zu gestalten.

Weiterhin besteht der Bedarf, derartige Verfahren für Elektrogeräteanordnungen auch bei Möbeln in Bereichen einzusetzen, für die besondere Sicherheitsvorschriften gelten, wie zum Beispiel im Pflege- und Hospitalbereich.

Die Aufgabe der vorliegenden Erfindung besteht darin, ein Verfahren für eine Elektrogeräteanordnung, insbesondere für Möbel mit einer Buseinrichtung und Busteilnehmern zu verbessern und gegenüber dem Stand der Technik weitere Vorteile hinsichtlich Wirtschaftlichkeit und Sicherheit zu schaffen.

Erfindungsgemäß wird diese Aufgabe durch ein Verfahren zum Steuern einer Elektrogeräteanordnung mit den Merkmalen des Anspruchs 1 und eine Elektrogeräteanorndung zur Durchführung eines solchen Verfahrens mit den Merkmalen des Anspruchs 18 gelöst.

Vorteilhafte Ausgestaltungen und Weiterbildungen der Erfindung sind Gegenstand der Unteransprüche.

Die der Erfindung zugrunde liegende Idee besteht darin, dass alle über eine Buseinrichtung verbundenen Busteilnehmer zusätzlich zu den Busleitungen mit mindestens einem Freigabepfad verbunden sind und sich alle nach den Vorgaben eines Busteilnehmers richten, der als Master fungiert und in welchem neben einem Ablaufprogramm auch noch die Steuerungsparameter abgespeichert sind. Dabei können sich die Busteilnehmer untereinander gegenseitig erkennen, vollautomatisch adressieren und miteinander kommunizieren.

Ein erfindungsgemäßes Verfahren zum Steuern einer Elektrogeräteanordnung, insbesondere für ein Möbel, mit einer Buseinrichtung und Busteilnehmern, wobei die Buseinrichtung zumindest zwei Steuerpfade, zwei Leistungspfade und mindestens einen Freigabepfad aufweist, weist folgende Verfahrensschritte auf:
(S1) Betätigen der Eingabeeinheit eines Busteilnehmers, der als Bedienungseinheit benutzt wird;
(S2) Klassifizieren dieses Busteilnehmers mittels eines Freigabepfades als Busteilnehmer mit Masterfunktion oder als ein weiterer Busteilnehmer; und (S3) Steuern des Busteilnehmers, der durch die Eingabeeinheit adressiert wird, wobei sich die Busteilnehmer nach den Vorgaben des Busteilnehmers mit der Masterfunktion richten.

Durch den zusätzlichen Freigabepfad wird die Erkennung der Busteilnehmer untereinander vorteilhaft vereinfacht, da nur der Busteilnehmer mit Masterfunktion das Signal auf den Freigabepfad setzt. Gleichzeitig schafft bzw. vereinfacht der Freigabepfad die Möglichkeit der so genannten Erstfehlersicherheit, den bestimmte Sicherheitsnormen fordern, indem nur bei einem an dem Freigabepfad anliegenden Signal alle oder ausgewählte Busteilnehmer oder Ausgänge der Busteilnehmer aktiviert werden und/oder mit elektrischer Energie versorgt werden. Dadurch wird ein großer Einsatzbereich geschaffen. Ein noch weiterer Vorteil des Freigabepfades besteht darin, dass die auf ihm geführten Signale beispielsweise zur Schaltung einer Netzfreischaltung und eines Schlafmodus dienen-und somit einen geringen Energieverbrauch bei Nichtbenutzung ermöglichen.

Dazu ist vorgesehen, dass der Verfahrensschritt (S2) Klassifizieren folgende Teilschritte aufweist:
(S2.1) Vergleichen eines auf dem Freigabepfad aufgebrachten Signals mit einem vorher festgelegten Wert;
(S2.2) Einstufen als weiterer Busteilnehmer anhand des Vergleichens; oder
(S2.3) Einstufen des Busteilnehmers als Busteilnehmer mit Masterfunktion.

In einer bevorzugen Ausgestaltung ist vorgesehen, dass der Verfahrensschritt (S2) Klassifizieren bei Einstufen des Busteilnehmers als Master weiterhin folgende Teilschritte aufweist:
(S2.4) Aktivieren des Freigabepfades durch Aufbringen eines vorher festgelegten Freigabesignals zum Aktivieren aller Busteilnehmer;
(S2.5) Generieren von Adressen für die Busteilnehmer und Aussenden dieser Adressen auf der Buseinrichtung;
(S2.6) Empfangen der von den Busteilnehmern zurückgesendeten Adressen mit deren Identitäten;
(S2.7) Speichern der empfangenen Adressen und Identitäten;
(S2.8) Zuordnen bestimmter Programmfunktionen zu den gespeicherten Adressen
und Identitäten; und
(S2.9) Wiederholen der Teilschritte (S2.5) bis (S2.8) bis alle Busteilnehmer erfasst sind.

Es kann davon ausgegangen werden, dass alle Busteilnehmer erfaßt sind, wenn sich nach einer vorbestimmten Zeitspanne kein weiterer Busteilnehmer meldet.

Und es ist außerdem bevorzugt vorgesehen, dass der Verfahrensschritt (S2) Klassifizieren bei einem weiteren Busteilnehmer weiterhin folgende Teilschritte aufweist:
(S2.31) Einstufen als weiterer Busteilnehmer;
(S2.32) Empfangen einer vom Busteilnehmer mit Masterfunktion zugeteilten Adresse und Speichern derselben; und
(S2.33) Ausgeben der Adresse zusammen mit einer Identität auf die Buseinrichtung (11) zum Senden an den Busteilnehmer mit Masterfunktion.

Eine bevorzugte Ausführung sieht vor, dass jeder Busteilnehmer zumindest eine Steuereinheit, eine Basis-Steuereinheit, eine Speichereinheit und eine Ausgabeeinheit und/oder eine Eingabeeinheit aufweist. Hiermit ist es möglich, alle Busteilnehmer vorteilhaft wirtschaftlich mit der gleichen Software auszustatten. Zum Beispiel wird dadurch die Synchronisation von Busteilnehmern oder von Antrieben, die als Antriebe oder als Steuerungen der Antriebe ausgebildet sind, wesentlich vereinfacht. Ein weiterer Vorteil der Basis-Steuereinheit besteht darin, dass diese besonders fehlerresistent ist und einen vorteilhaft überschaubaren Aufbau bildet. Die Basis-Steuereinheit dient bei Inbetriebnahme oder bei einem Reset oder Upgrade zum Start eines in der Steuereinheit ablaufenden Programms, welches in der Speichereinheit vorher festlegbar, aber auch vorteilhaft veränderbar abgespeichert ist. Hierbei ist es bevorzugt, dass bei Inbetriebnahme, einem Rücksetzbefehl oder bei Upgrades die Basis-Steuereinheit oder die Steuereinheit eines jeweiligen Busteilnehmers einen Datenaustausch mit dem den Master bildenden Busteilnehmer zum Identifizieren über die Buseinrichtung ausführt. Auf diese Weise wird eine Geräteanordnung mit einer Buseinrichtung ermöglicht, die vorteilhaft flexibel ist, was sowohl unterschiedliche Busteilnehmer als auch unterschiedliche Anwendungsfälle bei Möbeln betrifft.

Der Freigabepfad ist durch eine Eingabeeinheit eines Busteilnehmers, der eine Bedienungseinheit bildet, schaltbar. Es ist dazu vorteilhaft, dass dieser Busteilnehmer, der eine Bedienungseinheit bildet, den Freigabepfad mit Signalen beaufschlagt, durch welche alle anderen Busteilnehmer in ihrem Betriebszustand beeinflussbar sind. Der Freigabepfad wird mit einem logischen, kodierten oder periodischen Signal oder einem bestimmten Potenzial zur Freigabe beaufschlagt, wodurch sich eine vielfältige Beeinflussung der Busteilnehmer vorteilhaft einfach gestaltet. Dieses kann beispielsweise durch einfachen Tastendruck an der Bedienungseinheit erfolgen, womit entsprechende Signalgeneratoren für die Signale ausgelöst werden.

Es ist weiterhin bevorzugt, dass die Buseinrichtung als eine RS 485 Schnittstelle mit einem zusätzlichen Freigabepfad ausgebildet ist, wodurch eine Einrichtung mit hoher Qualität und hohem Standard verwendet wird, bei der eine vorteilhaft störfeste Datenübertragung gewährleistet ist. Mit der RS 485 Schnittstelle ist eine Datenübertragung im halbduplex-Verfahren möglich, das vorzugsweise auf einem sogenannten Master und Slave System aufbaut.

Dabei können mehrere Freigabepfade und/oder Freigabesignale vorhanden sein. Auf diese Weise können einzelne Busteilnehmer oder Verbraucher unterschiedlichen Gruppen zugewiesen sein. Beispielsweise könnte eine Gruppe Verbraucher aus elektromotorischen Antrieben bestehen, während eine andere Gruppe Verbraucher aus Leuchten bzw. Heizungen gebildet ist und eine weitere Gruppe Verbraucher aus Einheiten zur Massage gebildet ist.

In einer alternativen Ausgestaltung ist die Buseinrichtung als ein CAN-Bus mit einem zusätzlichen Freigabepfad ausgebildet.

In einer anderen Ausführungsform ist neben dem Freigabepfad noch ein weiterer Pfad angeordnet, welcher Signale zur Erkennung der Busteilnehmer untereinander aufweist.

In einer weiteren alternativen Ausgestaltung bilden die Busteilnehmer eine Daisy-Chain-Verkettung. Der Anfang der Verkettung ist durch eine vorbestimmte Einheit beispielsweise durch die Versorgungseinheit gebildet, an dessen Ausgang immer das Verkettungssignal gesetzt ist. Jeder Busteilnehmer vergleicht zwischen seinem Eingang und Ausgang das Verkettungssignal. Liegt das Signal nur am Eingang an, so hält dieser Busteilnehmer Rücksprache mit einem anderen Busteilnehmer, vorzugsweise mit dem Master, der als Bedienungseinheit ausgebildet sein kann. Der Master weist diesem Busteilnehmer nun eine Adresse zu, welche beiderseits gespeichert wird. Abschließen setzt dieser Busteilnehmer das Verkettungssignal an seinem Ausgang, was bereits ein weiterer Busteilnehmer an seinem Eingang abfragt, um sodann mit dem Master zu kommunizieren und von ihm eine Adresse zugewiesen zu bekommen.

Bei der bevorzugten Ausführungsform weist jede Bedieneinheit eine gewisse Intelligenz auf, während alle anderen Busteilnehmer vorzugsweise eine standardisierte Intelligenz beinhalten. Somit sind alle Steuerungsparameter und die Steuerungsprogramme und alle erforderlichen Daten auf einem Speicherbaustein der Bedienungseinheiten abgelegt. Die Buseinrichtung teilt sich somit in befehlsgebende Busteilnehmer und in ausführende Befehlsteilnehmer. Dies bietet den Vorteil, dass alle Busteilnehmer die gleichen Programme beinhalten, jedoch die Bedienungseinheiten zusätzlich die zur Steuerung der Buseinrichtung erforderlichen Programmeinheiten. Bei einem Wechsel des Steuerungsprogramms oder bei einer Programmierung bietet dies den Vorteil des geringsten Aufwandes. Ferner kann die Buseinrichtung nachträglich durch weitere Busteilnehmer ergänzt werden, ohne dass ein gesondertes Programm geschrieben werden muß.

In einer noch weiteren bevorzugten Ausführung ist vorgesehen, dass das Verfahren zum Steuern der Elektrogeräteanordnung Datenpakete verwendet, welche über die Buseinrichtung übertragen werden, wobei die Datenpakete zumindest die Adresse eines Busteilnehmers als ein Adressbyte, ein Befehlsbyte und eine Prüfbyte aufweisen. Dabei können die Datenpakete mindestens ein Datenbyte aufweisen.

In einer bevorzugten Ausführungsform gliedert sich das Adressbyte in mehrere Teile. Dabei können beispielsweise die ersten vier Bit Informationen über die Adressierung und weitere Bit Informationen über die Länge eines Datensatzes beinhalten. Bei einer Verwendung einer Vier-Bit-Information für die Adressenvergabe können bis zu 16 Busteilnehmer an einer Buseinrichtung angeordnet sein. Als weiteres folgt ein Befehlsbyte, welches Informationen zur Ansteuerung eines Verbrauchers oder eines Busteilnehmers beinhalten. Weiterhin können bei Bedarf zusätzliche Datenbytes folgen, welche Informationen beispielsweise für Updates oder zur Programmierung beinhalten, Als letztes folgt ein Prüfbyte, welches eine Checksumme des gesamten Datensatzes beinhaltet. Auf diese Art und Weise können Datensätze realisiert werden, dessen Länge sich variabel gestalten, im Normalfall jedoch aus Adressbyte, Befehlsbyte und Prüfbyte bestehen. Da die Datensätze sehr kurz ausgebildet sind, wird somit in vorteilhafter Weise der Datentransfer auf ein Minimum reduziert, was sich in einem hohen Maß an Zuverlässigkeit und Schnelligkeit bemerkbar macht.

In besonders bevorzugter Ausgestaltung ist vorgesehen, dass der Busteilnehmer, der als Bedienungseinheit einen Master bildet, in seiner Speichereinheit einen dazu geeigneten Programmabschnitt aufweist, welcher die Steuersoftware des Masters bildet. Durch eine solche Masterbildung wird es vorteilhaft ermöglicht, dass weitere Bedienungseinheiten, zum Beispiel bei Pflegebetten als Patientenbedienungen eingesetzt werden können. Weiterhin wird damit eine Ressourcenaufteilung der Prozessoren in der Geräteanordnung geschaffen, die vorteilhaft einfach und überschaubar ist.

Vorzugsweise sind die Steuereinheiten aller Busteilnehmer bis auf die Steuereinheit des Busteilnehmers, der als Bedienungseinheit einen Master bildet, bei Nichtbenutzung der Elektrogeräteanordnung elektrisch nicht versorgt oder nicht aktiv. Dieses bildet einen Vorteil in Bezug auf den Energieverbrauch der erfindungsgemäßen Anordnung bei Nichtbenutzung, da derartige Geräteanordnungen in der meisten Zeit in dem Zustand der Nichtbenutzung verbleiben. In einer anderen Ausführungsform sind nur Teile der einzelnen Busteilnehmer aktiv, so dass beispielsweise zum Betrieb mit einem Akkumulator ein stromsparender Schlafmodus realisiert ist.

In einer bevorzugten Ausführungsform des Steuerungsprogramms arbeitet das Steuerungsprogramm einzelne Scripte ab, die auch als Unterprogramme oder als eigenständige kleine Programme angesehen werden können. Dabei ist jeder Taste einer Bedienungseinheit mindestens ein Script zugeordnet. Diese Zuordnung kann beispielsweise in einer Tabelle festgehalten werden. Die Anzahl und der Inhalt der jeder Taste zugeordneten Scripte können unterschiedlich sein. Denkbar wäre ein erstes Script, das beim Drücken der Taste aufgerufen wird, während weitere Scripte beim Festhalten oder beim Loslassen der Taste aufgerufen werden.

Zwischen dem Anfangsblock und dem Endblock eines jeden Scriptes ist der Verfahrensablauf festgelegt, welcher bei Betätigen der zugehörenden Taste aktiviert wird. Weiterhin kann jedes Script Parameter zur Steuerung einzelner Verbraucher beinhalten. Somit ist beispielsweise festgelegt, welcher Verbraucher beispielsweise in Form eines elektromotorischen Antriebs mit welcher vorbestimmten Geschwindigkeit verfahren soll oder welcher Verbraucher beispielsweise in Form einer Leuchte mit welcher vorbestimmten Intensität leuchten soll. Andere Inhalte eines Scriptes können Zustände, Verfahrpositionen und Parameter sein, die von unterschiedlichen Verbrauchern stammen können. Weiterhin kann jedes Script die einzelnen Charakteristiken eines jeden Tasters beinhalten, Somit können Taster mit einer Tastfunktion (z.B. Motor EIN, solange Taster gedrückt ist), einer Togglefunktion (z.B. bei Tastdruck Lampe EIN und Lampe AUS bei erneutem Tastdruck), einer Memoryfunktion (z.B. bei kurzem Tastdruck Antrieb zu einer vorbestimmten Position verfahren) und einer Speicherfunktion (z.B. Abspeichem eines Wertes bei längerem Tastendruck) realisiert werden. Dabei sei angemerkt, dass jedes Script rein individuell und flexibel gestaltet sein kann, um sowohl einfache als auch komplexe Steuerungs- und Regelungsabläufe realisieren zu können, Die Größe des Scriptes ist dabei durch die Speicherkapazität des der Speichereinheit begrenzt.

Die Programmierung einzelner Scripte beispielsweise in Form von normierten Scripten kann vollautomatisch erfolgen. Hierzu dient ein übergeordnetes Programm oder ein Generator zur Scriptprogrammierung. In einer bevorzugten Ausführungsform können die Scripte mittels eines PC, eines Laptops oder eines tragbaren Programmiergerätes programmiert werden. Beispielsweise kann über eine auf Text und/oder Grafik basierenden Bildschirmoberfläche einem vorbestimmten Taster einer Bedienungseinheit mittels Tastatur- und/oder Mauseingabe einen Funktionsablauf, Parameter und die zu betreibenden Verbraucher zugeordnet werden. Ist die Eingabe erfolgt kann direkt mit dem Programmiergerät der Funktionsablauf simuliert oder bis auf weiteres in der Speichereinheit abgelegt werden. Dazu ist in vorteilhafter Ausführung vorgesehen, dass nach erfolgter Eingabe eine Konvertierung der Daten erfolgt, so dass als Ergebnis das Script erzeugt ist. Alternativ hierzu kann das Script auch manuell programmiert werden. Anschließend wird das Script erneut konvertiert und in Datenform in der Speichereinheit abgelegt. Sollen die in der Speichereinheit abgelegten Werte beispielsweise auf einem Bildschirm sichtbar gemacht werden, erfolgen die zuvor beschriebenen Schritte in umgekehrter Reichenfolge derart, dass zunächst aus der Datenform eine Konvertierung zu einem Script erfolgt und anschließend eine Konvertierung zu einer auf Grafik und/oder Text basierenden Anzeige erfolgen kann. Dabei übernimmt in einer bevorzugten Ausführungsform wie oben schon erwähnt ein Frogrammierprogramm des Programmiergerätes neben den Konvertierungen auch die Programmierung bzw. die Erstellung der Scripte.

Nachfolgend wird die Erfindung anhand der in den schematischen Figuren der Zeichnung angegebenen Ausführungsbeispiele näher erläutert. Es zeigt dabei:
- Figur 1: ein Flussdiagramm eines Ausflahrungsbeispiels des erfindungsgemäßen Verfahrens;
- Figur 2: ein Flussdiagramm eines Abschnitts des Ausführungsbeispiels nach Fig. 1;
- Figur 3: ein Blockschaltbild eines Ausführungsbeispiels einer erfindungsgemäßen Anordnung;
- Figur 4: ein Blockschaltbild eines Ausführungsbeispiels eines Busteilnehmers;
- Figur 5: ein Ausführungsbeispiel von Datenpaketen;
- Figur 6: eine schematische Darstellung eines Beispiels einer Programmieroberflä- che; und
- Figur 7: ein schematisches Blockschaltbild eines Beispiels zur Erläuterung der Programmieroberfläche nach Fig. 6.

Gleiche Bezugszeichen in den Figuren bezeichnen gleiche oder ähnliche Bauteile mit gleicher oder ähnlicher Funktion.

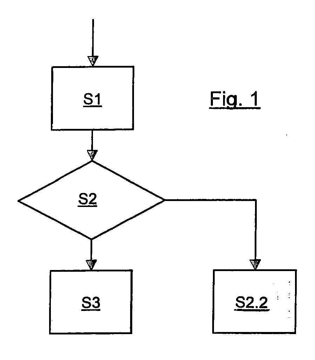

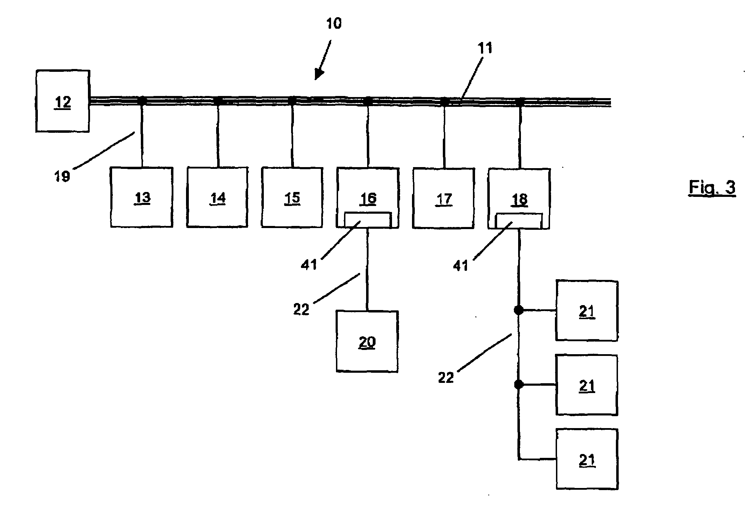

In Fig. 1 ist ein Flussdiagramm eines Ausführungsbeispiels des erfindungsgemäßen Verfahrens zum Steuern einer Elektrogeräteanordnung 10 (siehe Fig. 3), insbesondere für ein Möbel, mit einer Buseinrichtung 11 und Busteilnehmern 12...18, wobei die Buseinrichtung 11 zumindest zwei Steuerpfade, zwei Leistungspfade und mindestens einen Freigabepfad aufweist gezeigt.

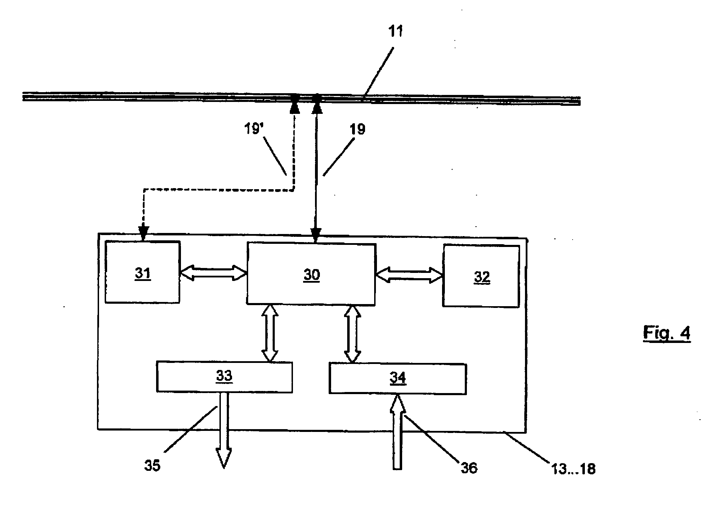

In einem ersten Verfahrensschritt S1 erfolgt ein Betätigen einer Eingabeeinheit 34 (siehe Fig. 4) eines Busteilnehmers 14, 17, der als Bedienungseinheit benutzt wird. Ein zweiter Verfahrensschritt S2 dient zum Klassifizieren dieses Busteilnehmers 14, 17 mittels eines Freigabepfades als Busteilnehmer 14 mit Masterfunktion oder als ein weiterer Busteilnehmer 17 (Verfahrensschritt S2.2).
Ein Steuern des Busteilnehmers 12, 13, 15...18, der durch die Eingabeeinheit 34 adressiert wird, erfolgt im Verfahrensschritt S3.

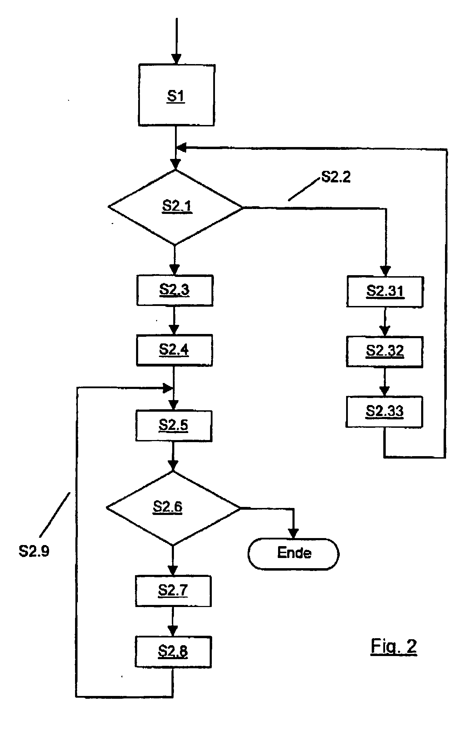

Das Klassifizieren im Verfahrensschritt S2 ist in mehrere Teilschritte aufgeteilt, welche in Fig. 2 in einem weiteren Flussdiagramm dargestellt sind.
Ein Vergleichen eines auf dem Freigabepfad aufgebrachten Signals mit einem vorher festgelegten Wert erfolgt zunächst im Schritt S2.1, woraus sich ein Einstufen als weiterer Busteilnehmer 17 im Schritt S2.2 oder ein Einstufen des Busteilnehmers als Busteilnehmer 14 mit Masterfunktion im Schritt S2.3 anhand des Vergleichens anschließt.

Bei der Einstufung des Busteilnehmers mit der Eingabeeinheit 34, die betätigt wird, als Master, aktiviert dieser den Freigabepfad im Schritt S2.4 durch Aufbringen eines vorher festgelegten Freigabesignals zum Aktivieren aller Busteilnehmer 12...18, Nach Freigabe erfolgt im Teilschritt S2.5 ein Generieren von Adressen für die Busteilnehmer 12... 18 und Aussenden dieser Adressen auf der Buseinrichtung 11. Die Busteilnehmer 12...18 empfangen diese an sie gerichteten Adressen, speichern sie ab und senden sie mit ihren Identitätsdaten im Schritt S2.6 an den anfordernden Busteilnehmer 14 als Master zurück, welcher diese im Schritt S2.7 speichert.

Dabei erfolgt im Teilschritt S2.8 ein Zuordnen bestimmter Programmfunktionen zu den so gespeicherten Adressen und Identitäten. Dieser Vorgang der Teilschritte S2.5 bis S2.8 wird im Schritt S2.9 solange wiederholt, bis alle Busteilnehmer erfasst sind.

Wird der Busteilnehmer mit der betätigten Eingabeeinheit 34 als ein weiterer Busteilnehmer 17 im Schritt S2.31 eingestuft, so empfängt er im Schritt S2.32 eine vom Busteilnehmer 14 mit Masterfunktion zugeteilten Adresse und speichert dieselbe. Darauf gibt er diese ihm zugeteilte Adresse mit einer Identität auf die Buseinrichtung (11) im Schritt S2.33 zum Senden an den Busteilnehmer 14 mit Masterfunktion aus.

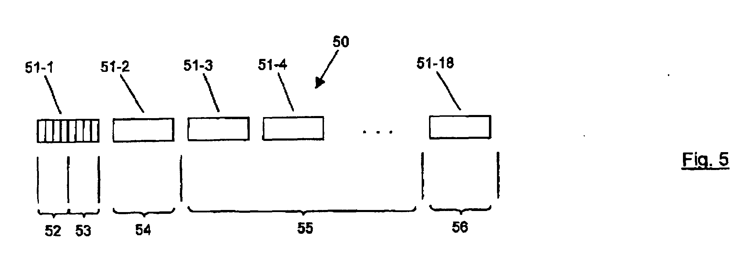

Diese Kommunikation zwischen den einzelnen Busteilnehmern 12...18 erfolgt mittels Datenpakete 50 (siehe Fig. 5) mit einer bestimmten Struktur, die weiter unten noch ausführlich erläutert wird.

Fig. 3 zeigt ein Blockschaltbild eines Ausführungsbeispiels einer erfindungsgemäßen Anordnung zur Durchführung des erfindungsgemäßen Verfahrens.

Die Geräteanordnung 10 besitzt die Buseinrichtung 11, welche als eine RS 485-Schnittstelle mit einem Datenpfad bestehend aus zwei Signalpfaden. Weiterhin weist die Buseinrichtung 11 mindestens zwei Versorgungspfade auf, die von einer Versorgungseinheit 12 mit elektrischer Energie beaufschlagt werden. Die Versorgungseinheit 12 befindet sich am Anfang der Buseinrichtung 11.
Die Buseinrichtung 11 besitzt außerdem mindestens einen Freigabepfad.

An die Buseinrichtung 11 sind an beliebiger Stelle Busteilnehmer 13...18 angeschlossen, indem sie mit den Datenpfaden, den Versorgungspfaden und dem Freigabepfad verbunden sind. Auch die Versorgungseinheit 12 bildet einen Busteilnehmer.
In dem in Fig. 3 dargestellten Beispiel sind folgende Busteilnehmer 13...18 dargestellt: eine PC-Einheit 13, eine erste Bedienungseinheit 14, ein Verbraucher 15, eine erste Steuerung 16, eine zweite Bedienungseinheit 17 und eine zweite Steuerung 18. Diese Geräteanordnung 10 ist nur beispielhaft gezeigt und kann zum Beispiel eine elektrische Geräteanordnung an einem Pflegebett sein, das nicht dargestellt ist.

Die PC-Einheit 13 ist hier ein Personalcomputer, mit welchem Daten in die Datenpfade der Buseinrichtung 11 eingespeist werden, um zum Beispiel bei Inbetriebnahme oder Wartung der Geräteanordnung 10 eine erstmalige Speicherung von Daten zur Anpassung der elektrischen Geräte in Speichereinheiten der Busteilnehmer vorzunehmen. Dazu gehören zum Beispiel unter anderem auch Tabellen über Hubwege der Antriebe usw. Darüber hinaus kann mit der PC-Einheit 13 oder mit einem tragbaren Programmiergerät die Programme einzelner oder aller Busteilnehmer 13...18 geändert, erneuert oder ausgetauscht werden, wie unten noch weiter im Detail erläutert wird.

Die erste Bedienungseinheit 14 ist ein Handschalter, mit welchem sämtliche Funktionen der elektrischen Geräteanordnung 10 gesteuert werden. Er besitzt Ein- und Ausgabefunktionen, die später noch erläutert werden. Weiterhin ist in ihm das Steuerprogramm für die Geräteanordnung vorgesehen. Der Verbraucher 15 ist in diesem Beispiel eine Lampe.

Die erste Steuerung 16 ist für einen ersten Antrieb 20 vorgesehen, welcher zum Beispiel ein Doppelantrieb zur Verstellung eines Lattenrostes des Pflegebetts ist. Die Steuerung weist unter anderem eine Leistungseinheit 41 auf, die mit dem ersten Antrieb 20 verbunden ist. Ihre Funktion wird später noch erläutert.

Eine zweite Bedienungseinheit 17 ist ein so genannter Patientenhandschalter mit eingeschränkter Funktionsweise, das heißt, der in dem Pflegebett befindliche Patient kann nur die für ihn zugelassenen Funktionen der elektrischen Geräteanordnung 10 des Pflegebetts bedienen, zum Beispiel nur die Verstellung des Kopfteils.

Durch Umstecken der zweiten Bedienungseinheit 17 oder Umprogrammieren derselben durch die PC-Einheit 13 lässt sich eine vorteilhaft einfache Anpassung an den jeweiligen Patienten ermöglichen. Durch Weglassen dieser zweiten Bedienungseinheit 17 ist die Geräteanordnung 10 selbstverständlich auch für andere Möbel vorteilhaft einfach zu verwenden.

Die zweite Steuerung 18 besitzt ebenfalls eine Leistungseinheit 41, die mit zweiten Antrieben 21 verbunden ist, welche hier im Ausführungsbeispiel Einzelantriebe zur Höhenverstellung des Bettes sind, die nicht näher erläutert werden.

Auch die Versorgungseinheit 12 ist ein Busteilnehmer.

Über die Buseinrichtung 11 ist eine Synchronisation zum Beispiel der Antriebe 20, 21 möglich.

Jeder Busteilnehmer 12...18 ist mit einer Prozessorsteuerung ausgerüstet, wie im Zusammenhang mit der Fig. 4 im Folgenden näher beschrieben wird.

Fig. 4 zeigt dazu ein Blockschaltbild eines Ausführungsbeispiels eines Busteilnehmers 13...18.

Der Busteilnehmer 13...18 weist Folgendes auf: eine Steuereinheit 30, vorzugsweise mit einem Prozessor, eine Basis-Steuereinheit 31, eine Speichereinheit 32, eine Ausgabeeinheit 33 mit Ausgängen 35 und eine Eingabeeinheit 34 mit Eingängen 36.

Die Steuereinheit 30 ist mit der Buseinrichtung 11 verbunden, das heißt mit den Daten- und Leistungspfaden sowie mit dem Freigabepfad. In einer anderen Ausführung ist die Basis-Steuereinheit 31 mit der Buseinrichtung 11 direkt verbunden. Die Steuereinheit 30 steht weiterhin mit der Basis-Steuereinrichtung 31, der Speichereinrichtung 32 und den Einrichtungen zur Ausgabe 35 und Eingabe 34 in Verbindung,

In dem Fall, in dem der Busteilnehmer eine Steuerung eines Antriebs 20, 21 ist, ist die Ausgabeeinheit 33 als Leistungseinheit 41 mit einem Ausgang 35 zum Anschluss an den jeweiligen Antrieb 20, 21 ausgebildet, was nicht weiter erläutert wird. Die Eingabeeinheit 34 dient hierbei zum Empfang von Steuersignalen von Messgebern des Antriebs 20, 21, beispielsweise zur Positionserfassung.

Ist der Busteilnehmer eine Bedienungseinheit 14, 17, so ist die Eingabeeinheit 34 mit einer Tastatur verbunden. Diese Tastatur kann auch ein Touchscreen oder ähnliches sein. Die Ausgabeeinheit 33 ist beispielsweise zum Anschluss an einen Anzeigeschirm oder an Kontrollleuchten ausgebildet.

Die Speichereinheit 32 beinhaltet vorher festgelegte Datenwerte, einzeln und in Tabellenform, die auch nachträglich noch durch die PC-Einheit 13 oder bei Betrieb automatisch veränderbar sind. Die festgelegten Datenwerte sind Identitätsinformationen und Angaben zur Leistungsfähigkeit bzw. Funktion des jeweiligen Busteilnehmers.

Im Falle der ersten Bedienungseinheit 14 beinhaltet die Speichereinheit 32 das Steuerprogramm für die Geräteanordnung 10.

Bei einer Inbetriebnahme der Geräteanordnung 10, bzw, Wartung, Reset, Neustart übernimmt die Basis-Steuereinheit 31 den Start des in der Speichereinheit 32 eines jeden Busteilnehmers 12...18 befindlichen Programms. Sie organisiert Updates/Upgrades der Steuersoftware/des Betriebssystems des jeweiligen Busteilnehmers 12...18. Sie wird auch als BIOS bezeichnet, was Basic Input/Output System bedeutet.

In einer anderen Ausführungsform beinhaltet jede Bedienungseinheit 14, 17 eine Speichereinheit 32 und ein Steuerungsprogramm für die Geräteanordnung 10.

Die Steuereinheit 30 überprüft die Datenpfade nach einem Datensatz, der für ihn bestimmt ist, das heißt die Adresse des Busteilnehmers, in dem sich die Steuereinheit 30 befindet. Bei Erhalt eines solchen Datensatzes (wird später erläutert) wird der in ihm übertragene Steuerbefehl, zum Beispiel "Einschalten Lampe" ausgeführt. Bei den Antrieben überwacht die Steuereinheit 30 die Ist-Position des Antriebs und sendet gegebenenfalls Daten darüber mittels der Datenpfade der Buseinrichtung 11 an seinen Befehlsgeber, hier die erste Bedienungseinheit 14, zurück, wobei der Befehlsgeber diese Ist-Position mit Soll-Vergleichswerten der Geräteanordnung vergleicht und den Antrieb durch weitere Steuerbefehle weiterfahren lässt oder abschaltet.

Der jeweilige Busteilnehmer 12...18 kann diese Steuerbefehle jedoch nur ausführen, wenn er über den Freigabepfad freigeschaltet ist. Dazu wird von der ersten Bedienungseinheit 14 der Freigabepfad beispielsweise bei Tastendruck mit einem Signal beaufschlagt, das entweder alle Busteilnehmer 12...18 oder selektiv nur bestimmte freischaltet. Dieses kann durch ein logisches, kodiertes oder periodisches Signal oder durch ein Schaltsignal oder durch ein bestimmtes Potenzial erfolgen. Dabei kann eine Überwachung dieses Signals ausgeführt werden, wodurch beispielsweise auch Kabelbrüche erkannt werden können.

In Weiterführung dieser Ausführungsform können mehrere Freigabepfade vorhanden sein, welche einzelnen Gruppen von Busteilnehmern 13...l 8 zugeordnet sein können.

Dabei können die Freigabepfade ausschließlich in der Buseinrichtung 10 integriert sein oder zusätzlich über einen eigenen Pfad zu den einzelnen Busteilnehmern 13...18 geführt sein.

Eine weitere vorteilhafte Ausführungsform sieht vor, dass die Freigabeleitung die Spannungsversorgung von Schaltorganen beispielsweise von Relais, Mikroprozessoren oder Steuereinheiten 30 der einzelnen Busteilnehmer 13...18 sicherstellt. Eine Weiterbildung dieser Ausführungsform sieht eine Bedienungseinheit vor, welche von der Bedienungseinheit 14 räumlich getrennt z.B. in Form einer Schalttafel am Rahmen eines Bettes angeordnet ist und Schalter beinhaltet, welche das Signal der Freigabeleitung schalten.

In einer anderen Ausführungsform ist vorgesehen, dass jeder Busteilnehmer 13...18 prinzipiell den Datentransfer beobachtet. Werden über einen vorbestimmten Zeitraum keine Daten mehr vom dem als Busteilnehmer ausgebildeten Master gesendet obwohl dennoch ein Signal an dem Freigabepfad anliegt, kann dies ein Merkmal für eine Störung sein. Aus dem Grund ist vorgesehen, dass der Busteilnehmer 13...18 sich selbsttätig deaktiviert und gegebenenfalls ein Signal ausgibt. Dabei ist vorgesehen, dass sich der Busteilnehmer nach Ändern des Zustandes an dem Freigabepfad oder nach Ändern des Zustandes des Datentransfers sich selbsttätig aktiviert.

Bei Tastendruck der ersten Bedienungseinheit 14 wird ein Datenpaket 50 auf die Datenpfade der Buseinrichtung 11 aufgebracht, welches in Fig. 5 dargestellt ist. Dabei kann die erste Bedienungseinheit 14 dadurch definiert sein, dass sie als erster Teilnehmer an der Buseinrichtung 10 in Betrieb genommen wird und somit den Master bildet.

Das Datenpaket 50 besteht in diesem Ausführungsbeispiel aus Bytes 51-1 bis 51-18: einem Adressbyte 52 mit Datenbyteanzahl 53, einem Steuerbyte 54, Datenbytes 55 und einem Prüfbyte 56.

Je nach Art des gesendeten Datenpakets 50 werden mindestens drei Bytes 52 und 53, 54 und 56 übertragen. In diesem Ausführungsbeispiel besteht das Adressbyte 52 aus vier Bit, daraus ergibt sich eine maximale Anzahl von 16 Busteilnehmern. In weiterer Ausgestaltung des gezeigten Beispiels kann jedes Byte aus einzelnen Bits oder mehreren Bytes bestehen, um somit eine individuelle Anpassung der Buseinrichtung realisieren zu können.

Das Adressbyte 52 führt die Adresse des adressierten Busteilnehmers, die Byteanzahl gibt die Anzahl der Bytes 51-1 bis 15-18 des Datenpakets 50 an, das Steuerbyte 54 führt den kodierten Steuerbefehl für den jeweilig adressierten Busteilnehmer, die Datenbytes 55 enthalten zu übertragende Datenwerte und das Prüfbyte 56 dient zur Prufung des Datenpakets 50, durch eine Checksumme gebildet sein kann, was nicht weiter erläutert wird. Es sei noch angemerkt, dass gemäß des Ausführungsbeispiels die Länge des die Datenbytes 55 aus den Bytes 51-3 bis 51-17 gebildet ist und somit nur beispielhaft 15 Bytes lang ist. Die Länge des Datenbytes richtet sich nach der Menge der zu übertragenden Daten, die beispielsweise bei einem Update erforderlich sind.

Im Folgenden wird die Inbetriebnahme und Initialisierung der Geräteanordnung beschrieben.

In dem hier gezeigten Beispiel werden Busteilnehmer mit gleichen Eigenschaften verwendet, was eine hohe Flexibilität bedeutet. Diese besitzen zur Identifikation unterschiedliche Adressen. Zur Vermeidung von Kodierschaltern in den Busteilnehmern wird ein Daisy-Chain-Pfad benutzt.

Die Vergabe von Adressen erfolgt bei jedem Tastendruck bzw. Setzen des Freigabepfades. Dies hat den Vorteil, dass das ganze System auf volle Funktionsfähigkeit geprüft wird und ein Hinzufügen oder Entfernen von Busteilnehmern automatisch erkannt wird.

Die Buseinrichtung 11 besteht vorzugsweise aus einer RS485-Schnittstelle mit dem zusätzlichen Freigabepfad, der zur Signalisierung dient, dass ein Master die Buseinrichtung 11 belegt hat. Dieser Pfad kann auch für eine Netzfreischaltung genutzt werden. Dabei kann der Master eine Batterie-/Akkuversorgung aufweisen. Weiterhin wird mit dem Freigabepfad eine Beeinflussung des Betriebszustands eines jeweiligen Busteilnehmers erzielt.

Weiterhin besitzt die Buseinrichtung 11 einen Daisy-Chain-Pfad.

Die Versorgungseinheit 12 ist immer am Anfang der Buseinrichtung 11 angeordnet und setzt den Daisy-Chain-Pfad auf einen bestimmten Wert.

Beim Tastendruck wird geprüft, ob der Freigabepfad ein bestimmtes Signal oder Potenzial fuhrt. Ist dieses nicht vorhanden, wird der Busteilnehmer mit der gedrückten Taste der Master. Ist schon ein Master vorhanden, signalisiert dies der Freigabepfad. Dann wartet der Busteilnehmer ab, bis der vorhandene Master ihn unter seiner Busadresse anspricht. Der Busteilnehmer speichert alle Adressen mit der Zuweisung aller Busteilnehmer.

Ist der Busteilnehmer der Master, so setzt er den Freigabepfad auf ein bestimmtes Signal, wodurch alle Busteilnehmer eine Initialisierung durchführen. Der Daisy-Chain-Pfad wird auf einen bestimmten Wert gesetzt.
Innerhalb einer bestimmten Zeit müssen alle Busteilnehmer betriebsbereit sein, zum Beispiel 10 ms.

Der Busteilnehmer, der direkt nach der Versorgungseinheit angeschlossen ist, hat an seinem Daisy-Chain-Eingang den bestimmten Datenwert der Versorgungseinheit 12. Dieser Busteilnehmer reagiert auf die Adresse und antwortet mit seiner Identität und speichert die Adresse, mit der er angesprochen wurde. Eine Ausnahme besteht, wenn der Master dieser Busteilnehmer ist, dann weist er sich selbst die Adresse zu und sendet seine Identität auf die Buseinrichtung 11 und fragt nach dem nächsten Busteilnehmer. So werden allen Busteilnehmer erfasst und der Master beendet die Initialisierung nach Erhalt der letzten Antwort nach einem bestimmten Zeitabschnitt von zum Beispiel 10 ms oder wenn nach einer vorgegebenen Zeitspanne keine Antwort mehr kommt.

Beispielsweise kann über eine auf Text und/oder Grafik basierenden Bildschirmoberfläche einem vorbestimmten Taster einer Bedienungseinheit mittels Tastatur- und/oder Mauseingabe wenigstens ein Funktionsablauf, wenigstens ein Parameter und/oder der/die zu betreibende(n) Verbraucher zugeordnet werden.

Ist die Eingabe erfolgt, kann direkt mit dem Programmiergerät der Funktionsablauf simuliert oder bis auf weiteres in der Speichereinheit abgelegt werden. Dazu ist in vorteilhafter Ausführung vorgesehen, dass nach erfolgter Eingabe eine Konvertierung der Daten erfolgt, so dass als Ergebnis das Script erzeugt ist. Alternativ hierzu kann das Script auch manuell programmiert werden. Anschließend wird das Script erneut konvertiert und in Datenform in der Speichereinheit abgelegt.

Sollen die in der Speichereinheit abgelegten Werte beispielsweise auf einem Bildschirm sichtbar gemacht werden, erfolgen die zuvor beschriebenen Schritte in umgekehrter Reichenfolge derart, dass zunächst aus der Datenform eine Konvertierung zu einem Script erfolgt und anschließend eine Konvertierung zu einer auf Grafik und/oder Text basierenden Anzeige erfolgen kann. Dabei übernimmt in einer bevorzugten Ausführungsform wie oben schon erwähnt ein Programmierprogramm des programmiergerätes neben den Konvertierungen auch die Programmierung bzw. die Erstellung der Scripte.

Im Folgenden wird eine solche Programmierung in beispielhafter Weise mit der der PC-Einheit 13 beschrieben. In diesem Beispiel arbeitet das Steuerungsprogramm so genannte einzelne Scripte ab, zum Beispiel Unterprogramme und/oder auch Makros.

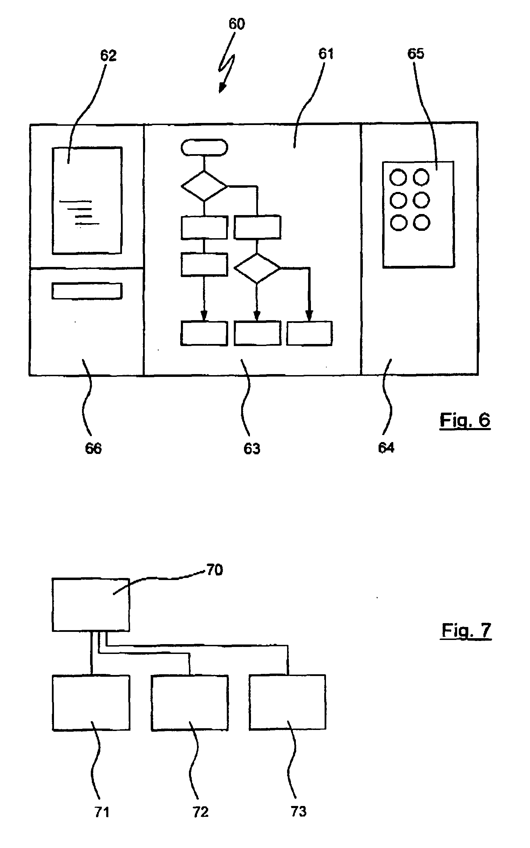

Jedes Script kann rein individuell und flexibel gestaltet sein, um sowohl einfache als auch komplexe Steuerungs- und Regelungsabläufe realisieren zu können. Die Größe des Scriptes ist dabei durch die Speicherkapazität des der Speichereinheit begrenzt. Die Programmierung einzelner Scripte kann vollautomatisch erfolgen. Hierzu dient ein übergeordnetes Programm mit einer Programmieroberfläche 60 zur Scriptprogrammierung, wie sie in Fig. 6 schematisch gezeigt ist. Die Programmieroberfläche 60 besteht hier aus einer Maske 61. Die Maske 61 weist beispielsweise folgende Abschnitte auf: einen Menüabschnitt 62, einen Funktionsabschnitt 63, einen Bildabschnitt 64 und einen Statusabschnitt 66. Die Maske 61 ist selbstverständlich nicht auf diese Abschnitte eingeschränkt.

Im Funktionsabschnitt 63 sind verschiedene Funktionen abrufbar, die mit Termen aus dem Menüabschnitt 62, wie zum Beispiel "Rücken hoch", "Fuß runter" usw., kombinierbar sind, indem diese Terme aus dem Menüabschnitt 62 in vorteilhaft einfacher Weise in den Funktionsabschnitt 63 per Mausklick herübergezogen werden können. Der Bildabschnitt 64 zeigt dazu ein passendes Bild 65, zum Beispiel eine Tastatur einer Bedienungseinheit 14, 16, deren Bedienelemente jeweils bei einer aufgerufenen Funktion diese visualisieren, indem sie blinken oder dergleichen. Auch eine Zuordnung erstellter Programme zu bestimmten Bedienelementen auf dem Bild 65 ist durch Mausklick und Herüberziehen möglich.

Mittels des Funktionsabschnitts 63 können die Terme des Menüabschnitts 62 zu einem Programm zusammengestellt werden. Dazu gibt es folgende Möglichkeiten. Ein Flussdiagramm, wie in Fig. 6 beispielhaft gezeigt, wird auf der Programmieroberfläche 60 mit den üblichen Mitteln wie Maus oder Touchscreen zusammengestellt. Weiterhin ist es auch möglich, ein Programm mit Anweisungen in Textform über eine Tastatur zu erstellen. Eine Umwandlung von Anweisungstext in Flussdiagramm und umgekehrt ist ebenfalls vorgesehen. Notwendige Parameter, wie zum Beispiel Hub, Geschwindigkeit und dergleichen, werden jeweils über Tastatur oder aus dem Menüabschnitt 62 mit Mausklick eingebunden.

Der Statusabschnitt 66 dient zur weiteren Information über Parameter, Einstellungen und dergleichen.

Die weitere Funktion wird nun anhand von Fig. 7 beschrieben.

In Fig. 7 ist zur weiteren Erläuterung der Programmierung ein schematisches Blockschaltbild dargestellt. Ein Programmierblock 70 ist mit einer Eingabeeinrichtung 71, einer Ausgabeeinrichtung 72 und einer Speichereinrichtung 73 verbunden. Der Programmierblock 70 ist eine Programmiersoftware innerhalb der PC-Einheit 13, in einem Programmiergerät oder auch in einem Gerät der Buseinrichtung 11, zum Beispiel in einer Bedienungseinheit 14, 17. Die Eingabeeinrichtung 71 ist die Programmieroberfläche 60 nach Fig. 6 und die Speichereinrichtung 73, in welchem beispielsweise unter anderem auch die grafischen Symbole für Maske 61 und auch andere Masken abgelegt sind, ist ein Speicherbereich der PC-Einheit 13 oder des Programmiergerätes.

Das im Funktionsabschnitt 63 der Programmieroberfläche 60 erstellte Programm in Form eines Flussdiagramms wird von der Programmiersoftware im Programmierblock 70 automatisch in ein Script konvertiert, welches in die Buseinrichtung 11 einspeisbar ist. Dabei wird im Programmierblock 70 zunächst das Flussdiagramm in Befehlsanweisungen umgewandelt, aus denen das Programm erzeugt wird, aus welchem dann das Script erstellt wird. Mit der Programmieroberfläche 60 wird das Erstellen von Scripts für die Steuerung der Buseinrichtung 11 vorteilhaft einfacher, schneller und effizienter. Eine relativ hohe Fehlerwahrscheinlichkeit wie bei einer üblichen Texteingabe von Programmieranweisungen durch Tippfehler wird damit behoben. Nur die Ablauflogik für das Programm bzw. das Script wird in der Kommunikationsebene zwischen Mensch und Maschine visualisiert und als Flussdiagramm dargestellt. Die Ablauflogik kann somit grafisch gestaltet werden, wobei die meisten Parameter und Wahlmöglichkeiten durch den Menüabschnitt 62 schon vorgegeben werden und nur noch mit Mausklick in das Flussdiagramm im Funktionsabschnitt 63 übernommen werden müssen. Damit ist eine vorteilhaft einfache Programmierung und/oder Änderung durch jede Fachkraft ermöglicht, wobei sich auch eine vorteilhafte Zeiteinsparung ergibt, da zum Beispiel eine Fehlersuche durch geringere Fehlerwahrscheinlichkeit verkürzt wird.

Die Erfindung ist nicht auf das oben Beschriebene beschränkt, sondern auf vielfältige Art und Weise modifizierbar.

So kann zum Beispiel eine elektromotorische Antriebseinheit 40 oder ein Verbraucher 15 als ein Busteilnehmer ausgebildet sein und die Steuerung 16 mit der Leistungseinheit 41 aufweisen.

Die Buseinrichtung 11 kann zum Beispiel als Daisy-Chain-Verkettung ausgebildet sein. Ferner kann die Buseinrichtung 11 nach Art eines CAN-Busses aufgebaut sein.

Der Freigabepfad kann zur so genannten Erstfehlersicherheit dienen, indem eine Taste der Master-Bedienungseinheit 14 den Freigabepfad direkt schaltet. In dem Fall, in dem keine Erstfehlersicherheit gefordert wird, kann dazu eine Logik bzw. der Prozessor des Masters den Freigabepfad schalten.

Der Freigabepfad kann eine Netzfreischaltung in der Versorgungseinheit 12 bzw. als weiteren Busteilnehmer schalten. Es ist auch möglich, dass der Freigabepfad die Busteilnehmer zwischen einem Betriebs- und einem Nichtbetriebsmodus zur Energieeinsparung umschaltet.

Ferner kann der Freigabepfad auf die Steuereinheit 30 oder den Ausgang 35 derart einwirken, dass beim Fehlen des Freigabesignals der Ausgang 35 nicht geschaltet wird, um beispielsweise ein unbeabsichtigtes Anlaufen beispielsweise eines Motors eines Antriebs oder eines Einschalten eines Verbrauchers 15, 20, 21, 40 zu verhindern. Ferner kann die Steuereinheit 30 jedes Busteilnehmers 13...18 nach einer vorgegebenen Zeitspanne, nach welcher keine Datenpakete empfangen werden, den Ausgang 35 deaktivieren.

Die Steuereinheiten 31 der Busteilnehmer mit Ausnahme des Masters werden nur bei Tastendruck des Masters mit Energie versorgt.

Auch ein Sensor oder ein Schalter können Busteilnehmer sein.
Im Falle des Betriebes mindestens eines Busteilnehmers 13...18 mit einem Akkumulator schaltet das Signal der Freigabeleitung den jeweiligen Busteilnehmer 13...18 oder zumindest die Steuereinheit 30 zwischen einem Betriebsmodus und einem stromsparenden Schlafmodus.

Es ist ebenfalls denkbar, dass die Programmieroberfläche 60 auch bei Steuerungen Verwendung finden kann, die keine Busstruktur aufweisen.

### Bezugszeichenliste

- 10: Elektrogeräteanordnung
- 11: Buseinrichtung
- 12: Versorgungseinheit
- 13: PC-Einheit (Busteilnehmer)
- 14: Erste Bedienungseinheit (Busteilnehmer)
- 15: Verbraucher (Busteilnehmer)
- 16: Erste Steuerung (Busteilnehmer)
- 17: Zweite Bedienungseinheit (Busteilnehmer)
- 18: Zweite Steuerung (Busteilnehmer)
- 19, 19': Busverbindung
- 20: Erster Antrieb
- 21: Zweiter Antrieb
- 22: Antriebsverbindung
- 30: Steuereinheit
- 31: Basis-Steuereinheit
- 32: Speichereinheit
- 33: Ausgabeeinheit
- 34: Eingabeeinheit
- 35: Ausgang
- 36: Eingang
- 40: Antriebseinheit
- 41: Leistungseinheit
- 50: Datenpaket
- 51-1...-18: Bytes
- 52: Adressbyte
- 53: Byteanzahl
- 54: Befehlsbyte
- 55: Datenbyte
- 56: Prüfbyte
- 60: Programmieroberfläche
- 61: Maske
- 62: Menüabschnitt
- 63: Funktionsabschnitt
- 64: Bildabschnitt
- 65: Bild
- 66: Statusabschnitt
- 70: Programmierblock
- 71: Eingabeeinrichtung
- 72: Ausgabeeinrichtung
- 73: Speichereinrichtung
- S1...3,:
- S2.1...9:
- S2.31...33: Verfahrensschritte

## Patentansprüche

1. Verfahren zum Steuern einer Elektrogeräteanordnung (10) für ein Möbel mit einer Buseinrichtung (11) und Busteilnehmer (12...18), wobei die Buseinrichtung (11) zumindest zwei Steuerpfade, zwei Leistungspfade und mindestens einen Freigabepfad aufweist, mit folgenden Verfahrensschritten:
(S1) Betätigen der Eingabeeinheit (34) eines Busteilnehmers (14, 17), der als Bedienungseinheit benutzt wird;
(S2) Klassifizieren dieses Busteilnehmers (14, 17) mittels des mindestens einen Freigabepfades als Busteilnehmer (14) mit der Masterfunktion oder als weiteren Busteilnehmer (17) durch die folgenden Teilschritte:
(S2.1) Vergleichen eines auf dem mindestens einen Freigabepfad aufgebrachten Signals mit einem vorher festgelegten Wert;
(S2.2) Einstufen als weiterer Busteilnehmer (17) falls das Vergleichen ergibt, dass einer der Busteilnehmer (12...18) die Masterfunktion hat; oder andernfalls
(S2.3) Einstufen des Busteilnehmers (14, 17) als Busteilnehmer (14) mit der Masterfunktion; und
(S3) Steuern des Busteilnehmers (12...18), der durch die Eingabeeinheit (34) adressiert wird, wobei sich alle Busteilnehmer (12...18) nach den Vorgaben des Busteilnehmers (14) mit der Masterfunktion richten.

2. Verfahren nach Anspruch 1, **dadurch gekennzeichnet, dass** der Verfahrensschritt (S2) des Klassifizierens bei Einstufen als Busteilnehmer (14) mit Masterfunktion weiterhin folgende Teilschritte aufweist:
(S2.4) Aktivieren des mindestens einen Freigabepfades durch Aufbringen eines vorher festgelegten Freigabesignals zum Aktivieren aller Busteilnehmer (12...18);
(S2.5) Generieren von Adressen für die Busteilnehmer (12...18) und Aussenden dieser Adressen auf der Buseinrichtung (11);
(S2.6) Empfangen der von den Busteilnehmern (12...18) zurückgesendeten Adressen mit deren Identitäten;
(S2.7) Speichern der empfangenen Adressen und Identitäten;
(S2.8) Zuordnen bestimmter Programmfunktionen zu den gespeicherten Adressen und Identitäten; und
(S2.9) Wiederholen der Teilschritte (S2.5) bis (S2.8) bis alle Busteilnehmer (12...18) erfasst sind.

3. Verfahren nach Anspruch 1 oder 2, **dadurch gekennzeichnet, dass** der Verfahrensschritt (S2) des Klassifizierens bei Einstufen als weiterer Busteilnehmer (12...18) weiterhin folgende Teilschritte aufweist:
(S2.31) Einstufen als weiterer Busteilnehmer (12, 13, 15...18);
(S2.32) Empfangen einer vom Busteilnehmer (14) mit Masterfunktion zugeteilten Adresse und Speichern derselben; und
(S2.33) Ausgeben der Adresse zusammen mit einer Identität auf die Buseinrichtung (11) zum Senden an den Busteilnehmer (14) mit Masterfunktion.

4. Verfahren nach einem der vorhergehenden Ansprüche 1 bis 3, **dadurch gekennzeichnet, dass** jeder Busteilnehmer (12...18) zumindest eine Steuereinheit (30), eine Basis-Steuereinheit (31), eine Speichereinheit (32) und eine Ausgabeeinheit (33) und/oder eine Eingabeeinheit (34) aufweist.

5. Verfahren nach einem der vorhergehenden Ansprüche 1 bis 4, **dadurch gekennzeichnet, dass** der mindestens eine Freigabepfad mit einem logischen, kodierten oder periodischen Signal oder einem bestimmten Potenzial zur Freigabe beaufschlagt wird.

6. Verfahren nach einem der vorhergehenden Ansprüche 1 bis 5, **dadurch gekennzeichnet, dass** die Buseinrichtung (11) als eine RS 485 Schnittstelle ausgebildet ist, ergänzt um den mindestens einen Freigabepfad und mindestens einen weiteren Pfad, vorzugsweise einen Pfad zur Daisy-Chain-Verkettung.

7. Verfahren nach einem der Ansprüche 1 bis 5, **dadurch gekennzeichnet, dass** die Buseinrichtung (11) als ein CAN-Bus, ergänzt um den mindestens einen zusätzlichen Freigabepfad ausgebildet ist.

8. Verfahren nach einem der vorhergehenden Ansprüche, **dadurch gekennzeichnet, dass** die Busteilnehmer (12...18) eine Daisy-Chain-Verkettung bilden.

9. Verfahren nach einem der vorhergehenden Ansprüche, **dadurch gekennzeichnet, dass** die Elektrogeräteanordnung (10) mittels Datenpakete (50) steuerbar ist, welche über die Buseinrichtung (11) übertragen werden, wobei die Datenpakete zumindest die Adresse eines Busteilnehmers (12...18) als ein Adressbyte (52), ein Befehlsbyte (54) und ein Prüfbyte (56) aufweisen.

10. Verfahren nach Anspruch 9, **dadurch gekennzeichnet, dass** die Datenpakete (50) weiterhin mindestens ein Datenbyte (55) aufweisen.

11. Verfahren nach einem der vorhergehenden Ansprüche, **dadurch gekennzeichnet, dass** der Busteilnehmer (14), der als Bedienungseinheit die Masterfunktion hat, in seiner Speichereinheit (32) einen dazu geeigneten Programmabschnitt aufweist, welcher eine Steuersoftware bildet.

12. Verfahren nach einem der vorhergehenden Ansprüche, **dadurch gekennzeichnet, dass** die Steuereinheiten (30) aller oder einzelner Busteilnehmer (12...18) bei Nichtbenutzung der Elektrogeräteanordnung (10) elektrisch nicht versorgt oder nicht aktiv sind.

13. Verfahren nach einem der vorhergehenden Ansprüche, **dadurch gekennzeichnet, dass** es zum Programmieren von Funktionen und zum Steuern der Busteilnehmer (12...18) eine grafische Programmieroberfläche (60) aufweist, welche auf einer Anzeigeeinrichtung einer PC-Einheit (13) oder eines anderen Programmiergerätes angezeigt wird.

14. Verfahren nach Anspruch 16, **dadurch gekennzeichnet, dass** die grafische Programmieroberfläche (60) Scripte zum Steuern der Busteilnehmer (12...18) erzeugt

15. Verfahren nach Anspruch 13 oder 14, **dadurch gekennzeichnet, dass** die grafische Programmieroberfläche (60) mindestens Folgendes aufweist:
einen Menüabschnitt (62) zur Funktionsauswahl;
einen Funktionsabschnitt (63) zur Zusammenstellung von Programmen;
einen Bildabschnitt (64) zur Anzeige von Bildern (65); und
einen Statusabschnitt (66) zur Statusanzeige.

16. Verfahren nach Anspruch 15, **dadurch gekennzeichnet, dass** Terme aus dem Menüabschnitt (62) in den Funktionsabschnitt (63) mittels grafischer Bedienelemente, vorzugsweise Maus und/oder Touchscreen, übernommen werden.

17. Verfahren nach Anspruch 15 oder 16, **dadurch gekennzeichnet, dass** in dem Funktionsabschnitt (63) dargestellte und/oder zusammengestellte Programme oder Programmabschnitte mittels grafischer Bedienelemente, vorzugsweise Maus und/oder Touchscreen, zumindest einem Bild (65) oder Abschnitte davon auf dem Bildabschnitt (64) zugeordnet werden.

18. Elektrogeräteanordnung (10) für ein Möbel, aufweisend eine Buseinrichtung (11) mit Busteilnehmern (12...18), wobei die Buseinrichtung (11) zumindest zwei Steuerpfade, zwei Leistungspfade und mindestens einen Freigabepfad aufweist **dadurch gekennzeichnet, dass** die Elektrogeräteanordnung (10) speziell dazu eingerichtet ist, ein Verfahren nach einem der Ansprüche 1 bis 17 durchzuführen.

## Claims

1. Method for controlling an electric appliance arrangement (10) for a piece of furniture having a bus device (11) and bus subscribers (12...18), wherein the bus device (11) has at least two control paths, two power paths and at least one enabling path, having the following method steps:
(S1) the input unit (34) of a bus subscriber (14, 17) which is used as an operator control unit is operated;
(S2) said bus subscriber (14, 17) is classified by means of the at least one enabling path as a bus subscriber (14) with the master function or as a further bus subscriber (17) by the following substeps:
(S2.1) a signal impressed on the at least one enabling path is compared with a previously stipulated value;
(S2.2) the bus subscriber is rated as a further bus subscriber (17) if the result of the comparison is that one of the bus subscribers (12...18) has the master function; or otherwise
(S2.3) the bus subscriber (14, 17) is rated as a bus subscriber (14) with the master function; and
(S3) the bus subscriber (12...18) which is addressed by the input unit (34) is controlled, wherein all the bus subscribers (12...18) comply with the requirements of the bus subscriber (14) with the master function.

2. Method according to Claim 1, **characterized in that** the method step (S2) of classification for rating as a bus subscriber (14) with the master function also has the following substeps:
(S2.4) the at least one enabling path is activated by impressing a previously stipulated enabling signal for the purpose of activating all the bus subscribers (12...18);
(S2.5) addresses are generated for the bus subscribers (12...18) and said addresses are transmitted on the bus device (11);
(S2.6) the addresses returned by the bus subscribers (12...18) are received with the identities thereof;
(S2.7) the received addresses and identities are stored;
(S2.8) particular program functions are allocated to the stored addresses and identities; and
(S2.9) substeps (S2.5) to (S2.8) are repeated until all the bus subscribers (12...18) have been captured.

3. Method according to Claim 1 or 2, **characterized in that** the method step (S2) of classification for rating as a further bus subscriber (12...18) also has the following substeps:
(S2.31) the bus subscriber is rated as a further bus subscriber (12, 13, 15...18);
(S2.32) an address assigned by the bus subscriber (14) with the master function is received and stored; and
(S2.33) the address is output together with an identity onto the bus device (11) for the purpose of sending it to the bus subscriber (14) with the master function.

4. Method according to one of the preceding Claims 1 to 3, **characterized in that** each bus subscriber (12...18) has at least one control unit (30), a basic control unit (31), a memory unit (32) and an output unit (33) and/or an input unit (34).

5. Method according to one of the preceding Claims 1 to 4, **characterized in that** the at least one enabling path has a logic, encoded or periodic signal or a particular potential for enabling applied to it.

6. Method according to one of the preceding Claims 1 to 5, **characterized in that** the bus device (11) is in the form of an RS 485 interface, complemented by the at least one enabling path and at least one further path, preferably a path for daisy-chain concatenation.

7. Method according to one of Claims 1 to 5, **characterized in that** the bus device (11) is in the form of a CAN bus, complemented by the at least one additional enabling path.

8. Method according to one of the preceding claims, **characterized in that** the bus subscribers (12...18) form a daisy-chain concatenation.

9. Method according to one of the preceding claims, **characterized in that** the electric appliance arrangement (10) can be controlled by means of data packets (50) which are transmitted via the bus device (11), wherein the data packets have at least the address of a bus subscriber (12...18) as an address byte (52), a command byte (54) and a check byte (56).

10. Method according to Claim 9, **characterized in that** the data packets (50) also have at least one data byte (55).

11. Method according to one of the preceding claims, **characterized in that** the bus subscriber (14) which, as an operator control unit, as a master function has in its memory unit (32) a program section suitable for this purpose which forms a piece of control software.

12. Method according to one of the preceding claims, **characterized in that** the control units (30) of all or individual bus subscribers (12...18) are not supplied with electricity or are not active if the electric appliance arrangement (10) is not being used.

13. Method according to one of the preceding claims, **characterized in that** it has a graphical programming interface (60), which is displayed on a display device of a PC unit (13) or of another programming appliance, for the purpose of programming functions and for the purpose of controlling the bus subscribers (12...18).

14. Method according to Claim 16, **characterized in that** the graphical programming interface (60) generates scripts for controlling the bus subscribers (12...18).

15. Method according to Claim 13 or 14, **characterized in that** the graphical programming interface (60) has at least the following:
a menu section (62) for function selection;
a function section (63) for compiling programs;
an image section (64) for displaying images (65); and
a status section (66) for status indication.

16. Method according to Claim 15, **characterized in that** terms are transferred from the menu section (62) to the function section (63) by means of graphical operator control elements, preferably a mouse and/or touch screen.

17. Method according to Claim 15 or 16, **characterized in that** programs or program sections presented and/or compiled in the function section (63) are allocated by means of graphical operator control elements, preferably a mouse and/or touch screen, to at least one image (65) or sections thereof on the image section (64).

18. Electric appliance arrangement (10) for a piece of furniture, having a bus device (11) with bus subscribers (12...18), wherein the bus device (11) has at least two control paths, two power paths and at least one enabling path, **characterized in that** the electric appliance arrangement (10) is set up specifically to carry out a method according to one of Claims 1 to 17.

## Revendications

1. Procédé destiné à la commande d'un agencement d'appareils électriques (10) d'un meuble avec un bus (11) et des composants de bus (12 ... 18), dans lequel le bus (11) présente au moins deux chemins de commande, deux chemins de puissance et au moins un chemin de validation, comportant les étapes de procédé suivantes :
(S1) actionnement de l'unité d'entrée (34) d'un composant de bus (14, 17) qui est utilisé comme unité d'actionnement ;
(S2) classification de ce composant de bus (14, 17) à l'aide de l'au moins un chemin de validation comme composant de bus (14) avec la fonction maître ou comme un autre composant de bus (17) par les sous-étapes suivantes :
(S2.1) comparaison d'un signal appliqué sur l'au moins un chemin de validation avec une valeur prédéterminée ;
(S2.2) classement comme un autre composant de bus (17) si la comparaison montre que l'un des composants de bus (12 ... 18) a la fonction maître ; ou sinon
(S2.3) classement du composant de bus (14, 17) comme composant de bus (14) avec la fonction maître ; et
(S3) commande du composant de bus (12 ... 18), qui est adressé par l'unité d'entrée (34), tous les composants de bus (12 ... 18) se conformant aux prescriptions du composant de bus (14) avec la fonction maître.

2. Procédé selon la revendication 1, **caractérisé en ce que** l'étape de procédé (S2) de classification lors du classement comme composant de bus (14) avec fonction maître présente en outre les sous-étapes suivantes :
(S2.4) activation de l'au moins un chemin de validation par application d'un signal de validation prédéterminé pour activer tous les composants de bus (12... 18) ;
(S2.5) génération d'adresses pour les composants de bus (12 ... 18) et envoi de ces adresses au bus (11) ;
(S2.6) réception des adresses renvoyées par les composants de bus (12 ... 18) avec leurs identités ;
(S2.7) enregistrement des adresses et identités reçues ;
(S2.8) affectation de certaines fonctions programme aux adresses et identités enregistrées ; et
(S2.9) répétition des sous-étapes (S2.5) à (S2.8) jusqu'à ce que tous les composants de bus (12 ... 18) soient saisis.

3. Procédé selon la revendication 1 ou 2, **caractérisé en ce que** l'étape de procédé (S2) de classification lors du classement comme un autre composant de bus (12 ... 18) présente en outre les sous-étapes suivantes :
(S2.31) classement comme un autre composant de bus (12, 13, 15 ... 18) ;
(S2.32) réception d'une adresse attribuée par le composant de bus (14) avec fonction maître et enregistrement de cette dernière ; et
(S2.33) émission de l'adresse conjointement avec une identité sur le bus (11) pour l'envoi au composant de bus (14) avec fonction maître.

4. Procédé selon l'une quelconque des revendications précédentes 1 à 3, **caractérisé en ce que** chaque composant de bus (12 ... 18) présente au moins une unité de commande (30), une unité de commande de base (31), une unité d'enregistrement (32) et une unité de sortie (33) et/ou une unité d'entrée (34).

5. Procédé selon l'une quelconque des revendications précédentes 1 à 4, **caractérisé en ce que** l'au moins un chemin de validation est soumis à un signal logique, codé ou périodique ou à un potentiel donné pour la validation.

6. Procédé selon l'une quelconque des revendications précédentes 1 à 5, **caractérisé en ce que** le bus (11) est réalisé sous forme d'interface RS 485, complétée par l'au moins un chemin de validation et au moins un autre chemin, de préférence un chemin pour Daisy-Chain.

7. Procédé selon l'une quelconque des revendications 1 à 5, **caractérisé en ce que** le bus (11) est réalisé sous forme de bus CAN, complété par l'au moins un chemin de validation supplémentaire.

8. Procédé selon l'une quelconque des revendications précédentes, **caractérisé en ce que** les composants de bus (12 ... 18) forment une Daisy-Chain.

9. Procédé selon l'une quelconque des revendications précédentes, **caractérisé en ce que** l'agencement d'appareils électriques (10) peut être commandé à l'aide de paquets de données (50) qui sont transférés par le biais du bus (11), les paquets de données présentant au moins l'adresse d'un composant de bus (12 ... 18) sous la forme d'un octet d'adresse (52), d'un octet d'instruction (54) et d'un octet de contrôle (56).

10. Procédé selon la revendication 9, **caractérisé en ce que** les paquets de données (50) présentent en outre au moins un octet de données (55).

11. Procédé selon l'une quelconque des revendications précédentes, **caractérisé en ce que** le composant de bus (14) qui, en tant qu'unité d'actionnement, a la fonction maître, présente dans son unité d'enregistrement (32) une section de programme adaptée pour ce faire qui constitue un logiciel de commande.

12. Procédé selon l'une quelconque des revendications précédentes, **caractérisé en ce que** les unités de commande (30) de tous les composants de bus ou de composants de bus individuels (12 ... 18) en cas de non utilisation de l'agencement d'appareils électriques (10) ne sont pas alimentées en électricité ou ne sont pas actives.

13. Procédé selon l'une quelconque des revendications précédentes, **caractérisé en ce qu'**il présente une surface de programmation graphique (60) pour programmer des fonctions et commander les composants de bus (12 ... 18), qui s'affiche sur un dispositif d'affichage d'une unité PC (13) ou d'un autre appareil de programmation.

14. Procédé selon la revendication 16, **caractérisé en ce que** la surface de programmation graphique (60) génère des scripts de commande des composants de bus (12 ... 18).

15. Procédé selon la revendication 13 ou 14, **caractérisé en ce que** la surface de programmation graphique (60) présente au moins les éléments suivants :
une section menu (62) pour la sélection de la fonction ;
une section fonction (63) pour l'élaboration de programmes ;
une section image (64) pour l'affichage d'images (65) ; et
une section état (66) pour l'affichage de l'état.

16. Procédé selon la revendication 15, **caractérisé en ce que** les termes de la section menu (62) sont repris dans la section fonction (63) au moyen d'éléments d'actionnement graphiques, de préférence souris et/ou écran tactile.

17. Procédé selon la revendication 15 ou 16, **caractérisé en ce que** les programmes ou sections de programmes élaborés et/ou représentés dans la section fonction (63) sont attribués à l'aide d'éléments d'actionnement graphiques, de préférence souris et/ou écran tactile, à au moins une image (65) ou des sections de celle-ci sur la section image (64).

18. Agencement d'appareils électriques (10) d'un meuble, présentant un bus (11) avec des composants de bus (12 ... 18), dans lequel le bus (11) présente au moins deux chemins de commande, deux chemins de puissance et au moins un chemin de validation, **caractérisé en ce que** l'agencement d'appareils électriques (10) est spécialement conçu pour réaliser un procédé selon l'une quelconque des revendications 1 à 17.
